(19) Europäisches Patentamt / European Patent Office / Office européen des brevets

(11) **EP 3 306 749 A1**

(12) **EUROPEAN PATENT APPLICATION**
published in accordance with Art. 153(4) EPC

(43) Date of publication:
**11.04.2018 Bulletin 2018/15**

(21) Application number: **15894162.5**

(22) Date of filing: **02.06.2015**

(51) Int Cl.:
**H01Q 21/06** (2006.01)   **H01Q 3/08** (2006.01)

(86) International application number:
**PCT/JP2015/065873**

(87) International publication number:
**WO 2016/194127 (08.12.2016 Gazette 2016/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Mitsubishi Electric Corporation
Chiyoda-ku
Tokyo 100-8310 (JP)**

(72) Inventor: **NATSUME, Koichi
Tokyo 100-8310 (JP)**

(74) Representative: **Trinks, Ole
Meissner Bolte Patentanwälte
Rechtsanwälte Partnerschaft mbB
Widenmayerstraße 47
80538 München (DE)**

(54) **ANTENNA DEVICE**

(57)   An antenna apparatus 100 includes: antenna units 30A and 30B arranged in a row and including: antennas 1A and 1B for receiving a radio wave from a satellite and generating received signals, and antenna drives 3A and 3B for changing an orientation direction, which is a direction in which the antennas 1A and 1B are directed; a direction command value generator 5 for generating a direction command value, which is a command value transmitted to the antenna drives 3A and 3B, so that the orientation direction matches a direction in which the satellite exists; a phase difference calculator 4 for calculating a phase difference, which is a difference between phases of the received signals generated by the antennas 1A and 1B; and a signal combiner 40 for combining the received signals on the basis of the phase difference.

FIG. 5

**Description**

Technical Field

The present invention relates to an antenna apparatus, mounted on a mobile object such as an aircraft or the like, for satellite communication.

Background Art

An aircraft-mounted antenna apparatus for satellite communication is attached to an upper portion of the body of the aircraft and causes an increase in air resistance. A reduction in the air resistance (so-called "drag") so-called "drag reduction" is required for an antenna mounted on the aircraft.
Cross-sectional surface area of the antenna apparatus viewed from the front in the advancing direction of the aircraft on which the antenna is mounted, abbreviated as the "nose-direction cross-sectional area", is required to be as small as possible in order to decrease the drag force. Technology for decreasing the nose-direction cross-sectional area of the antenna without changing antenna performance exists such as mounting of semicircular cylinder-shaped antenna elements on a rotatable base (see Patent Literature 1). Elevation angles of all the antenna elements are controlled to be the same, and the antenna elements can be directed in a wide range of directions. The antenna apparatus configured in this manner can have a small nose-direction cross-sectional area compared with a single-element antenna apparatus having an equivalent aperture size.

Citation List

Patent Literature

Patent Literature 1: Unexamined Japanese Patent Application Kokai Publication No. 2005-510104

Summary of Invention

Technical Problem

The conventional technology mounts all the antenna elements on a base and all the antenna elements rotate around a single azimuth angle. Thus spacing between antenna elements decreases as the diameter of the base decreases. When the antenna spacing is small and the antenna is directed at a low elevation angle, mutual interference and/or blocking between the antenna elements become large, and antenna gain decreases. Although mutual interference and/or blocking between the antenna elements at the low elevation angle decrease when the spacing between the antenna elements is increased, the base becomes longer in an arrangement direction of the antenna elements. This results in an increase in the diameter of the base which rotates around the azimuth angle. When the diameter of the base increases, width of the antenna apparatus increases as viewed from the advancing direction of the aircraft on which the antenna apparatus is mounted, and even though the antenna apparatus has low height, the nose-direction cross-sectional area increases. That is to say, the conventional technology has a problem in that there is a tradeoff between the lowering of antenna gain due to the interference and/or blocking between antenna elements and the decreasing of nose-direction cross-sectional area.
The present invention is developed in order to solve the above-described problems, and an object of the present invention is to obtain an antenna apparatus forming a single antenna with multiple antenna elements, having a small nose-direction cross-sectional area, and being capable of maintaining antenna gain even when the antenna is directed at a low elevation angle.

Solution to Problem

An antenna apparatus according to the present invention includes:

a plurality of antenna units disposed in a row, each antenna unit of the plurality of antenna units including: a planar antenna of a plurality of planar antennas to receive a radio wave from a satellite and generate a received signal of a plurality of received signals, and an antenna drive to change an orientation direction, the orientation direction being a direction in which the planar antenna is directed, the antenna drive being fixed to the mobile object.

Further, the antenna apparatus includes:

a direction command value generator to generate a direction command value, which is a command value provided to the antenna drive, such that the orientation direction matches a direction in which the satellite exists;

a phase difference calculator to calculate at least one phase difference, the phase difference being a difference in phase between the plurality of received signals generated by the plurality of planar antennas; and

a signal combiner to combine the received signals based on the at least one phase difference.

Spacing between the antenna units is determined such that an antenna utilization rate is greater than or equal to a lower limit determined for when an elevation angle is a determined value. The antenna utilization rate being a difference divided by a total aperture surface, the difference being the total aperture surface minus a sum obtained by adding for all of the antenna units a shadowed portion of overlap of the aperture surfaces of the planar antennas as viewing from the orientation direction of the planar antennas, the total aperture surface being a sum of all aperture surfaces of the planar antennas of the antenna units.

Advantageous Effects of Invention

According to the present invention, antenna gain can be maintained even when the antennas are directed at a low elevation angle, and the cross-sectional area of the antenna apparatus viewed from the advancing direction of the mobile object can be decreased.

Brief Description of Drawings

FIG. 1    is a side view of an antenna apparatus according to Embodiment 1 of the present invention;
FIG. 2    is a top view of the antenna apparatus according to Embodiment 1;
FIG. 3    is a front view of the antenna apparatus according to Embodiment 1;
FIG. 4    is a backside view of the antenna apparatus according to Embodiment 1;
FIG. 5    is a functional block diagram of the antenna apparatus according to Embodiment 1;
FIG. 6    is a drawing for explaining a path length difference of radio waves received by two antennas included in the antenna apparatus according to Embodiment 1;
FIG. 7    is a top view of a state in which antennas composing the antenna apparatus according to Embodiment 1 are directed in a direction perpendicular to a mounting surface;
FIG. 8    is a side view in a state in which height of the antenna apparatus according to Embodiment 1 is maximum;
FIG. 9    is a front view in the state in which the height of the antenna apparatus according to Embodiment 1 is maximum;
FIG. 10   is a top view in a state in which a single antenna, as a Comparative Example 1 having the same aperture area, is directed in a direction perpendicular to a mounting surface;
FIG. 11   is a side view in a state in which height of the single antenna, as Comparative Example 1 having the same aperture area, is maximum;
FIG. 12   is a top view illustrating antennas composing an antenna apparatus, as Comparative Example 2 in which two antennas rotate around the same azimuth axis, in a state directed in the direction perpendicular to the mounting surface;
FIG. 13   is a side view in a state in which height of the antenna apparatus, as Comparative Example 2 in which two antennas rotate around the same azimuth axis, is maximum;
FIG. 14   is a drawing for explaining a state in which antenna shadowing is generated in the antenna apparatus according to Embodiment 1;
FIG. 15   is a drawing for explaining a relationship between antenna azimuth angles and antenna utilization rates at the zenith angle in which antenna shadowing is generated in the antenna apparatus according to Embodiment 1;
FIG. 16   is a drawing for explaining a relationship between the antenna azimuth angles and the antenna utilizations rate at another zenith angle in which shadowing is generated in the antenna apparatus according to Embodiment 1;
FIG. 17   is a drawing for explaining a relationship between the elevation angles and the antenna utilization rates averaged by varying the antenna azimuth angle of the antenna apparatus according to Embodiment 1; and
FIG. 18   is a functional block diagram of an antenna apparatus according to Embodiment 2 of the present invention.

Description of Embodiments

Embodiment 1

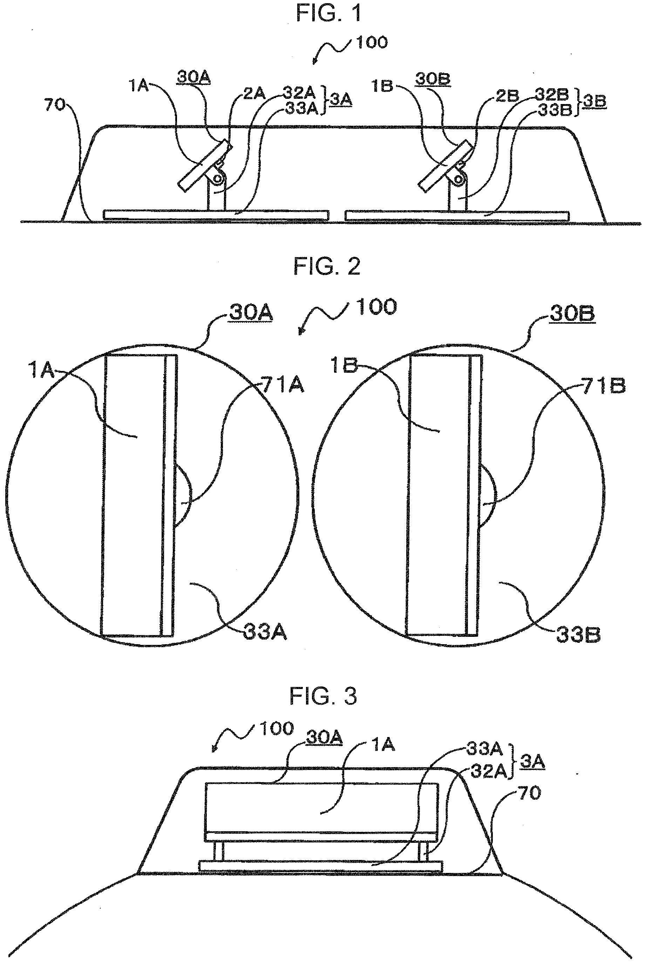

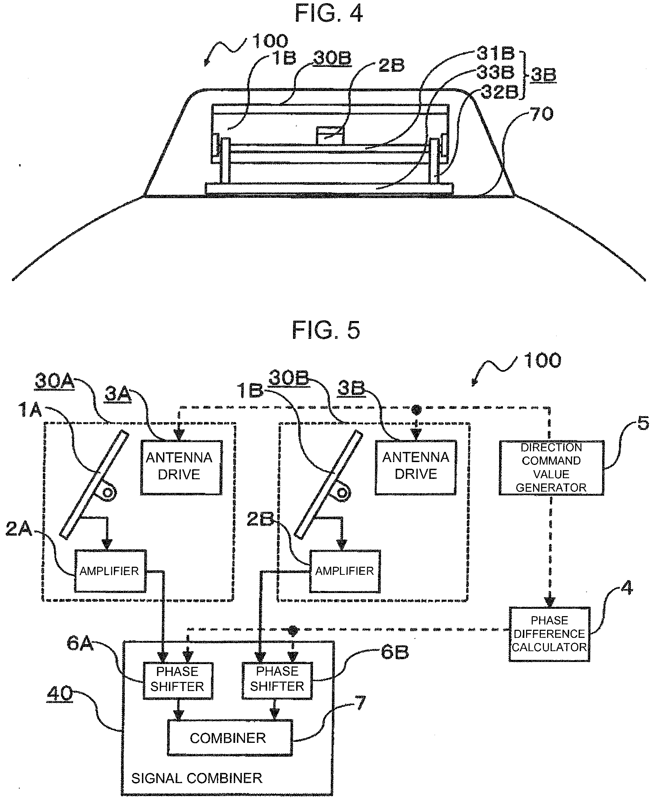

FIG. 1 is a side view of an antenna apparatus according to Embodiment 1 of the present invention. FIG. 2 is a top view of the antenna apparatus according to Embodiment 1. FIG. 3 is a front view of the antenna apparatus according to Embodiment 1. FIG. 4 is a backside view of the antenna apparatus according to Embodiment 1. FIG. 5 is a functional block diagram of the antenna apparatus according to Embodiment 1. In an antenna apparatus 100 according to this Embodiment 1, two antenna units 30A and 30B are disposed at a determined spacing in a row parallel to an aircraft body on an upper nose portion of the aircraft body 70. Three or more antenna units may be arranged with the determined spacing. Further, the direction of the aircraft body and the advancing direction of the aircraft body are the same direction. The direction of the aircraft body is also referred to as the aircraft nose direction.

The antenna units 30A and 30B are mounted on an antenna mounting surface located on the upper nose portion of the aircraft body 70. The direction perpendicular to the antenna mounting surface is referred to as the "direction vertical to the aircraft body". The aircraft nose-side antenna unit 30A includes: an antenna 1A for receiving radio waves from a satellite and generating a received signal, an amplifier 2A for amplifying the received signal output from the antenna 1A, an antenna drive 3A for changing orientation direction, which is the direction in which the antenna 1A is directed, and an aircraft body fixing portion 71A, which is a mobile object fixing portion for fixing the antenna drive 3A to the aircraft 70. The aircraft tail-side antenna unit 30B similarly includes an antenna 1B, an amplifier 2B, an antenna drive 3B, and an aircraft body fixing portion 71B. Further, the antennas 1A and 1B have the same structure, and the term "antenna 1" is used to refer to each of the antenna 1A and the antenna 1B. The "amplifier 2" and other components are also described in a similar manner.

The antenna apparatus 100 further includes a phase difference calculator 4 for calculating a phase difference of the received signals generated by the two antennas 1A and 1B, a direction command value generator 5 for generating a direction command value of the orientation direction of the antenna 1 transmitted to the antenna drive 3, and a signal combiner 40 for combining the amplified received signals output by the two antennas 1A and 1B on the basis of the phase difference calculated by the phase difference calculator 4. The signal output from the signal combiner 40 is demodulated by a non-illustrated demodulation device 50.

The signal combiner 40 includes two phase shifters 6A and 6B for adjusting and synchronizing the phases of the two input signals, and also includes a combiner 7 for combining the signals having phases synchronized by the phase shifters 6A and 6B. The phase shifter 6A adjusts the phase of the signal received by the antenna 1A. The phase shifter 6B adjusts the phase of the signal received by the antenna 1B.

The received signals of the antennas 1A and 1B are adjusted by the phase shifters 6A and 6B so that the phases match, and thus a maximal-ratio combined received signal strength at the combiner 7 becomes two times. In this manner, an antenna gain can be obtained that is equivalent to the antenna gain of the case in which a signal transmitted by the satellite is received with a single antenna that has twice the aperture area of the antenna 1A or the antenna 1B.

For making the phase difference to be zero, either the phase shifter 6A or the phase shifter 6B may be omitted, and the phase shift of one side may not be adjusted. A required number of phase shifters may be provided at required locations so as to enable the matching of phases of multiple received signals on the basis of the phase differences.

In order to utilize the effect of the present invention at the maximum, a planar antenna is preferably used as the antenna 1. The planar antenna does not have the physical limitations of an aperture surface shape such as that of a parabolic antenna, and the aperture surface shape of the planar antenna can be freely determined. The planar antenna can have a horizontally long rectangular shape while maintaining the same aperture area and antenna gain. By being long horizontally, the height of the antenna 1 can be suppressed even when the antenna 1 is directed at a low elevation angle. By using planar antenna units arranged in the direction of the aircraft body, an antenna apparatus having a reduced height can be achieved as illustrated in FIG. 1 to FIG. 4.

The amplifier 2 amplifies the received signal input from the antenna 1 and outputs the amplified signal to the phase shifter 6. The amplifier 2 is installed on the rear surface of the antenna 1 to minimize the deterioration of signal-to-noise ratio of the received signal. The amplifier may be installed at a different location.

The antenna drive 3 includes: an elevation angle changer 32 supporting the antenna 1 rotatably around an elevation axis 31, which is parallel to the antenna mounting surface and parallel to the longitudinal direction of the antenna 1, and an azimuth angle changer 33 supporting the elevation angle changer 32 rotatably relative to the aircraft body fixing portion 71 around the azimuth axis, which is perpendicular to the antenna mounting surface. Further, the azimuth axis and the elevation axis are mutually perpendicular to each other. Here, the "zenith angle" is the angle between the direction vertical to the aircraft body and the orientation direction. The "elevation angle" is the angle between the antenna mounting surface and the orientation direction.

When the planar antenna is supported from the side, the antenna apparatus has wider width due to the support components. In order to avoid having wider width, the antenna apparatus 100 is configured by disposing the elevation axis 31 to the rear of the antenna 1. A configuration may be used that supports the planar antenna from the side.

The elevation angle changer 32 and the azimuth angle changer 33 each include, as non-illustrated components, a motor for generating drive force to rotate around the axis and a drive force transmission mechanism to transmit the drive force generated by the motor. The antenna drive 3 includes a non-illustrated drive controller 34 for controlling the motor such that the azimuth angle and zenith angle of the antenna, that is, the orientation direction of the antenna, match the direction command values.

The direction command value generator 5 generates a direction command value that is a direction at which a satellite exists relative to the aircraft body 70, or more accurately, relative to the antenna mounting surface. To generate the direction command value, the direction command value generator 5 uses positional information of the satellite from which the antenna 1 receives radio waves, positional information of the aircraft obtained by the global positioning system (GPS) or the like, and attitude angles (yaw angle, pitch angle, and roll angle) of the aircraft acquired from an inertial navigation device mounted in the aircraft. The method of determining the orientation direction of the antenna on the basis of such data is termed an "open method". As another method, there is a closed loop method. In the closed loop method, the antenna apparatus receives a signal transmitted from the satellite, and the direction command value generator 5 measures signal strength of the signal received by the antenna apparatus, and determines the orientation direction of the antenna by feedback control such that the signal strength is maximum. The direction command value may be determined by a hybrid method that combines the open method and the closed loop method. The direction command value generated by any one of the methods described above is provided to the drive controller 34 so that the drive controller 34 drives the antenna drive 3 such that, within a permissible deviation from the direction command value, the antenna is directed in the direction in which the satellite exists.

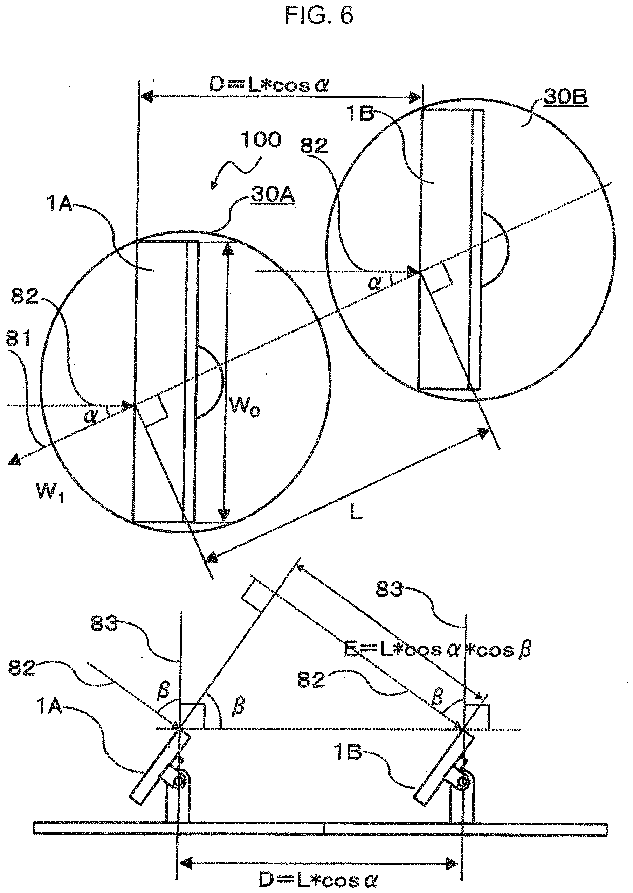

The phase difference calculator 4 calculates and outputs to the signal combiner 40 the phase differences between each of the received signals required for optimum combining of the received signals output from the antennas 1A and 1B. The method of calculating the phase differences is described with reference to FIG. 6. FIG. 6 is a drawing for explaining a path length difference of radio waves received by the two antennas included in the antenna apparatus according to Embodiment 1. The azimuth angle $\alpha$ is the angle between the aircraft nose direction 81 and the azimuth direction component obtained by projecting the orientation direction 82 of the antenna perpendicularly onto the antenna mounting surface. The zenith angle $\beta$ is the angle between the direction vertical to the aircraft body 83 and the orientation direction 82 of the antenna. Unit spacing, which is the distance between each center of the azimuth axis shafts of the antenna units 30A and 30B, is indicated by a variable L. The orientation direction distance, which is the distance of the unit spacing L projected in the orientation direction 82 of the antenna, is indicated by a variable D. As may be understood from the top view at the upper portion of FIG. 6, the orientation direction distance D and the unit spacing L are interrelated in the below described manner.

$$D = L \times \cos\alpha \qquad\qquad (1)$$

As may be understood from the side view of the lower portion of FIG. 6, the angle between the antenna mounting surface and the orientation direction 82 of the antenna is also $\beta$. Thus a path length difference E of the signals transmitted by the satellite and received by the antennas 1A and 1B has the below indicated relationship with the orientation direction distance D.

$$E = D \times \sin\beta \qquad\qquad (2)$$

The below equation is obtained by combining the Equation (1) and the Equation (2). That is to say, the path difference E is determined from the azimuth angle $\alpha$ and the zenith angle $\beta$.

$$E = L \times \cos\alpha \times \sin\beta \qquad\qquad (3)$$

A phase difference $\delta$ between the signals transmitted by the satellite and received by the antennas 1A and 1B is obtained by dividing the path length difference E by the wavelength $\lambda$.

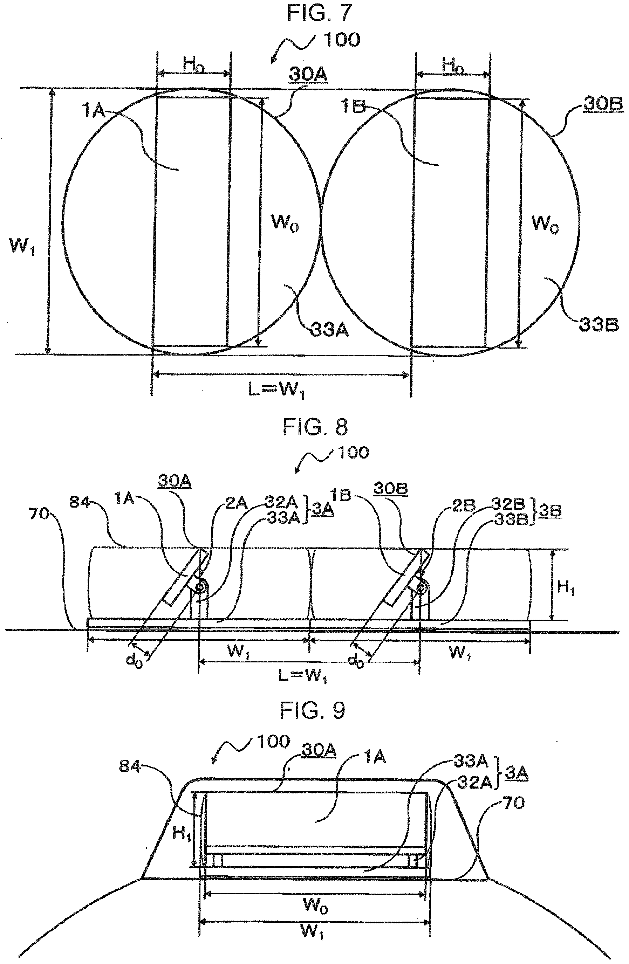

The size of the antenna apparatus 100 is discussed below. FIG. 7 is a top view of a state in which antennas composing the antenna apparatus according to Embodiment 1 are directed in the direction perpendicular to the mounting surface.

FIG. 8 is a side view in a state in which the height of the antenna apparatus according to Embodiment 1 is maximum. FIG. 9 is a front view in the state in which the height of the antenna apparatus according to Embodiment 1 is maximum. FIG. 7 to FIG. 9 are drawings illustrating the case in which the antenna 1 is directed in the aircraft nose direction. As may be understood from the front view of FIG. 9, one characteristic of the present invention is that the nose-direction cross-sectional area is that of a single antenna unit, even though multiple antenna units are aligned on the aircraft body in the advancing direction.

Width of the antenna 1 is expressed by a variable $W_0$, and height is expressed by a variable $H_0$. Distance (referred to as the "elevation axis distance") between the center of the elevation axis shaft for changing the zenith angle $\beta$ of the antenna 1 and the aperture surface of the antenna 1 receiving radio waves is expressed by a variable do. The elevation axis 31 is provided at a position such that a straight line, at which a plane including the center of the elevation angle 31 shaft and being perpendicular to the aperture surface intersects with the aperture surface, divides the aperture surface in two in the height direction. The height of the center of the elevation axis 31 shaft from the antenna mounting surface is determined to be half of the height $H_0$ of the antenna 1.

The space in which the antenna 1 may exist, referred to as the "antenna space", is discussed below in the case in which the azimuth angle $\alpha$ of the antenna 1 is varied over the entire orientation range of 360° and the zenith angle $\beta$ is varied over the range of -90° to 90°. The boundary of the antenna space 84 is indicated by the dotted lines in FIG. 8 and FIG. 9. The antenna space 84 is shaped like a round column with low height. Diameter of the antenna space 84 is expressed by a variable $W_1$, and height is expressed by a variable $H_1$. In the case in which a straight line connecting the center of the elevation axis 31 shaft and an edge portion being farthest from the center of the elevation axis 31 shaft in the side view in the aperture surface of the antenna 1 is parallel to the antenna mounting surface, this edge portion of the antenna 1 has a maximum distance from the center of the azimuth axis. Thus the diameter $W_1$ of the antenna space 84 can be calculated by the below indicated equation. Further, as illustrated in the top view of FIG. 7 and other figures, diameter of the azimuth angle changer 33 is expressed as being equal to the diameter of the antenna space 84.

$$W_1 = \sqrt{(W_0^2 + H_0^2 + d_0^2)}, \qquad\qquad (4)$$

Here, the unit spacing L is required to be set so that each antenna unit 30 can rotate without interference and is required to satisfy the following equation.

$$L \geq W_1 \qquad\qquad (5)$$

As illustrated in FIG. 8, when the edge portion being farthest from the center of the elevation axis 31 shaft in the side view in the aperture surface of the antenna 1 is positioned on the plane including the center of the elevation angle 31 shaft and being perpendicular to the antenna mounting surface, the distance of this edge portion from the antenna mounting surface is maximum. Thus the height $H_1$ of the antenna space can be calculated by the below-listed equation.

$$H_1 = H_0/2 + \sqrt{((H_0/2)^2 + d_0^2)}, \qquad\qquad (6)$$

When the nose-direction cross-sectional area, which is the cross-sectional area of the antenna space viewed from the aircraft nose direction, is expressed by a variable $S_1$, $S_1$ can be calculated by the below-listed equation. The cross-sectional shape of the antenna space has rounded corners in precisely. The cross-sectional shape of the antenna space is assumed to be rectangular to simplify calculations.

$$S_1 = W_1 \times H_1$$
$$= \sqrt{(W_0^2 + H_0^2 + d_0^2)}, \qquad\qquad \times (H_0/2 +$$
$$\sqrt{((H_0/2)^2 + d_0^2)}, \qquad\qquad ) \quad (7)$$

As may be understood from Equation (7), the antenna apparatus according to the present invention is characterized in that the nose-direction cross-sectional area $S_1$ is not dependent on the spacing L between the antenna units 30.

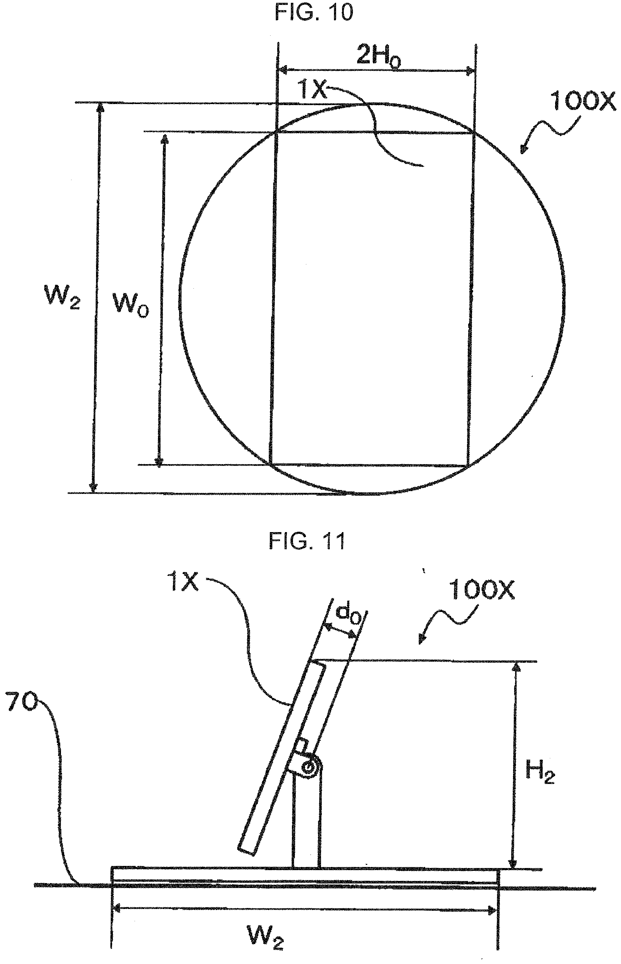

In order to explain that the nose-direction cross-sectional area $S_1$ to be decreased according to the present invention, the nose-direction cross-sectional areas are calculated below for two comparative examples. In Comparative Example 1, a single antenna has the same aperture area. FIG. 10 is a top view in a state in which a single antenna, as Comparative Example 1 having the same aperture area, is directed in the direction perpendicular to the mounting surface. FIG. 11 is a side view in a state in which height of the single antenna, as Comparative Example 1 having the same aperture area, is maximum. An antenna apparatus 100X of Comparative Example 1 has a single antenna IX. Width of the antenna IX is $W_0$, the same as in Embodiment 1, while height is doubled ($2H_0$), and elevation axis distance is do. In Comparative Example 1, the diameter of the antenna space is expressed by a variable $W_2$, height of the antenna space is expressed by a variable $H_2$, and the nose-direction cross-sectional area is expressed by a variable $S_2$.

In Comparative Example 1, the antenna space diameter $W_2$, the height $H_2$, and the nose-direction cross-sectional area $S_2$ can be calculated by the following equations.

$$W_2 = \sqrt{(W_0{}^2 + 4H_0{}^2 + d_0{}^2)}, \tag{8}$$

$$H_2 = H_0 + \sqrt{(H_0{}^2 + d_0{}^2)}, \tag{9}$$

$$\begin{aligned}S_2 &= W_2 \times H_2 \\ &= \sqrt{(W_0{}^2 + 4H_0{}^2 + d_0{}^2)}, \times (H_0 + \sqrt{(H_0{}^2 + d_0{}^2)}, )\end{aligned}$$
$$(10)$$

The nose-direction cross-sectional area obtained by the present invention is shown by numerical example to be smaller than the nose-direction cross-sectional area obtained by Comparative Example 1. Dimensions of the antenna apparatus 100 of the present invention are calculated below for the case in which the antenna width $W_0$ is 1.00 m, the height $H_0$ is 0.30 m, and the elevation axis distance do is 0.10 m.

$$W_1 = \sqrt{(1.00^2 + 0.30^2 + 0.10^2)} = 1.049\,\text{m}$$

$$H_1 = 0.30/2 + \sqrt{((0.30/2)^2 + 0.10^2)} = 0.330\,\text{m}$$

$$S_1 = W_1 \times H_1 = 1.049 \times 0.330 = 0.346\,\text{m}^2$$

Dimensions are calculated in the following manner for the antenna apparatus 100X of Comparative Example 1.

$$W_2 = \sqrt{(1.00^2 + 4 \times 0.30^2 + 0.10^2)} = 1.170\,\text{m}$$

$$H_2 = 0.30 + \sqrt{(0.30^2 + 0.10^2)} = 0.616\,\text{m}$$

$$S_2 = W_2 \times H_2 = 1.170 \times 0.616 = 0.721\,\text{m}^2$$

A reduction rate $\gamma_2$ of the nose-direction cross-sectional area relative to Comparative Example 1 is indicated below. The nose-direction cross-sectional area can be decreased to less than half, about 48%, that of Comparative Example 1.

$$\gamma_2 = S_1/S_2 = 0.346/0.721 = 0.480$$

The reduction rate $\gamma_2$ is further decreased if the elevation axis distance $d_0$ is further decreased. If do is equal to 0 m, then $\gamma_2$ is equal to 0.448.

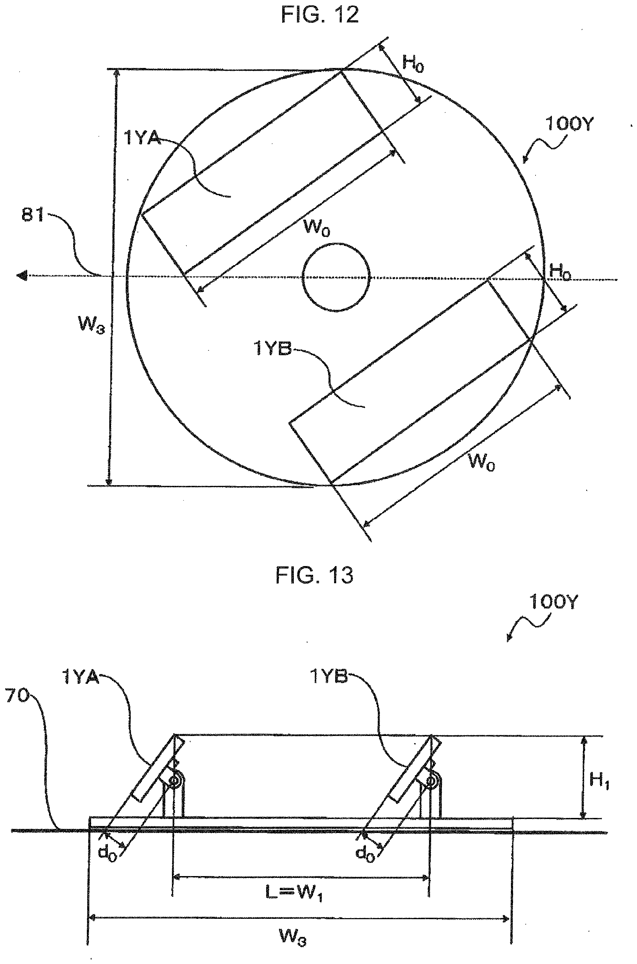

Comparative Example 2 is discussed below in which, as disclosed in Patent Literature 1, two antennas are mounted on a platform rotating around a single azimuth axis. FIG. 12 is a top view illustrating antennas composing an antenna apparatus, as Comparative Example 2 in which two antennas rotate around the same azimuth axis, in a state directed in the direction perpendicular to the mounting surface. An antenna apparatus 100Y of Comparative Example 2 includes a front-side antenna 1YA and a backside antenna 1YB. FIG. 12 illustrates the state in which the antennas 1YA and 1YB are directed in the direction in which the antenna width is maximum as viewed from the aircraft nose direction. FIG. 13 is a side view in a state in which height of the antenna apparatus, as Comparative Example 2 in which two antennas rotate around the same azimuth axis, is maximum. The antennas 1YA and 1YB are the same as the antennas 1A and 1B. Here, a spacing L exists between the two antennas 1YA and 1YB.

In Comparative Example 2, the diameter of the antenna space is expressed by a variable $W_3$, height of the antenna space is expressed by a variable $H_3$, and nose-direction cross-sectional area is expressed by a variable $S_3$.

In Comparative Example 2, the antenna space diameter $W_3$, the height $H_3$, and the nose-direction cross-sectional area $S_3$ can be calculated by the following equations.

$$W_3 = \sqrt{(W_0{}^2 + (L + \sqrt{(H_0{}^2 + d_0{}^2)})^2)} \tag{11}$$

$$H_3 = H_1 = H_0/2 + \sqrt{((H_0/2)^2 + d_0{}^2)} \tag{12}$$

$$S_3 = W_3 \times H_3$$
$$= \sqrt{(W_0{}^2 + (L + \sqrt{(H_0{}^2 + d_0{}^2)})^2)} \times (H_0/2 + \sqrt{((H_0/2)^2 + d_0{}^2)}) \tag{13}$$

In the same manner as in Comparative Example 1, dimensions are calculated in the case in which the antenna width $W_0$ is 1.00 m, the height $H_0$ is 0.30 m, and the elevation axis distance do is 0.10 m. To compare with the present invention, calculation is performed by setting the antenna unit spacing L equal to $W_1$. Further, in the case of the antenna apparatus according to the present invention, the antenna unit spacing L is required to be greater than or equal to the antenna space diameter $W_1$ to cause the antenna unit 30 to be able to rotate.

Results of calculation are listed below for Comparative Example 2 in the case of L equal to $W_1$.

$$W_3 = \sqrt{(1.00^2 + (1.049 + \sqrt{(0.30^2 + 0.10^2)}))} = 1.692\,\text{m}$$

$$H_3 = H_1 = 0.330\,\text{m}$$

$$S_3 = W_3 \times H_3 = 1.692 \times 0.330 = 0.558\,\text{m}^2$$

A reduction rate $\gamma_3$ of the nose-direction cross-sectional area relative to Comparative Example 2 is indicated below in the case in which L is equal to $W_1$. The nose-direction cross-sectional area can be decreased to about 62% that of Comparative Example 2.

$$\gamma_3 = S_1/S_3 = 0.346/0.6558 = 0.620$$

Comparative Example 2 having L equal to $W_1$ means the case in which shadowing at a low elevation angle is of the same extent as the shadowing at a low elevation angle in the present invention. It is understood that the present invention can decrease the nose-direction cross-sectional area to about one half of that of Comparative Example 2.

In the case of L = 1.5 $W_1$, the antenna space width $W_3$ of Comparative Example 2 is 2.177 m. The antenna space width $W_1$ of the present invention does not depend on the unit spacing L, and thus does not change even when L is set to be equal to 1.5 $W_1$. Thus in the case of L = 1.5 $W_1$, $\gamma_3 = 0.4818$, that is, is less than one half. As the unit spacing L is made larger in order to decease shadowing of the antenna at low elevation angle, the reduction rate of the nose-direction cross-sectional area of the present invention increases compared with Comparative Example 2.

Thus, according to the present invention, the nose-direction cross-sectional area can be decreased compared with the conventional antenna apparatus that has the same surface area of the aperture surface. A case is indicated here in which the antenna is divided into two units. The nose-direction cross-sectional area can also be decreased in the case in which the antenna is divided into three or more units.

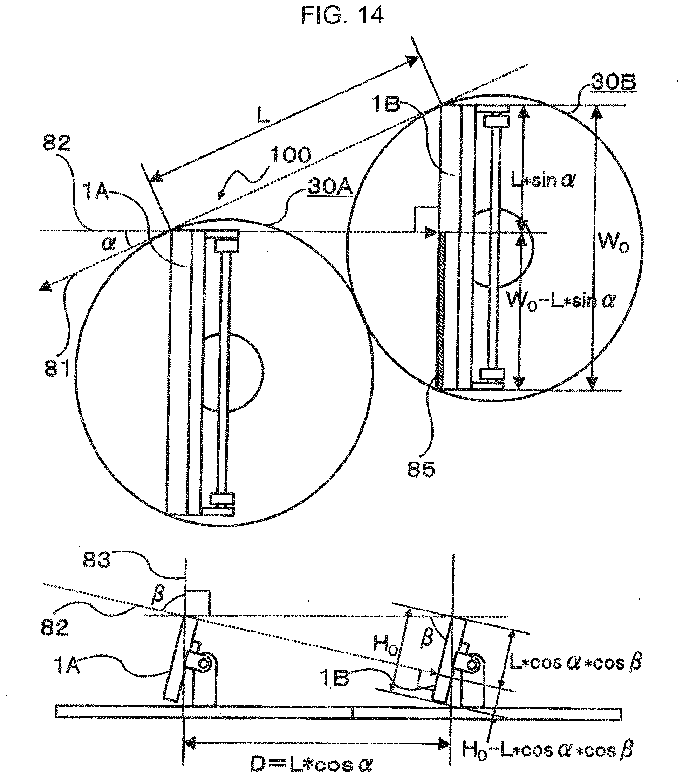

Next, in the case in which the antenna is directed at a low elevation angle, the surface area of the rear antenna shadowed by the front antenna changes in accordance with azimuth angle changes, and the present invention can decrease shadowing in the entire antenna. FIG. 14 is a drawing for explaining a state in which antenna shadowing is generated in the antenna apparatus according to Embodiment 1. In FIG. 14, as illustrated in the upper top view, a shadowed portion 85 is generated by shadowing. The shadowed portion 85 is illustrated by hatching.

For the antenna apparatus 100, height of a portion where the front and rear antennas overlap as viewed from the orientation direction of the antenna is referred to as the overlap height. Further the width of the antenna overlapping portion is referred to as the overlap width. The overlap height is expressed by a variable $G_{H1}$, the overlap width is expressed by a variable $G_{W1}$, and the surface area of the shadowed portion is expressed by a variable Gsi.

As illustrated in the side view at the lower portion of FIG. 14, the angle between the direction vertical to the aircraft body 83 and the orientation direction 82 of the antenna is the zenith angle $\beta$, and thus the angle between a line connecting the upper edges of the antennas 1A and 1B and the aperture surfaces of the antennas is also $\beta$. Thus the radio wave passing through the near vicinity of the upper edge of the antenna 1A arrives at a position that is $L \times \cos\alpha \times \cos\beta$ below the upper edge of the aperture surface of the antenna 1B. If the distance between this position and the upper edge of the antenna 1B is greater than or equal to the height $H_0$ of the antenna 1B, the front and rear antennas do not overlap as viewed from the orientation direction. Thus the overlap height $G_{H1}$ can be calculated by the below indicated equation.

$$G_{H1} = \max(0, H_0 - L \times \cos\alpha \times \cos\beta) \qquad (14)$$

The minimum zenith angle at which shadowing is generated in Comparative Example 2 is referred to as the shadowing start zenith angle and is expressed by a variable $\beta s0$. In the antenna apparatus 100 of the present invention, the shadowing start zenith angle $\beta s0$ is the minimum zenith angle that generates an overlapping portion in the height direction when the azimuth angle $\alpha$ is 0°. The shadowing start zenith angle $\beta s0$ can be calculated by the below equation.

$$\beta s0 = \cos^{-1}(H_0/L) \qquad (15)$$

A shadowing start azimuth angle $\alpha s$, which is the azimuth angle $\alpha$ at which an overlapping portion is generated in the height direction when the zenith angle $\beta$ is such an angle at which the overlapping portion is generated in the height direction, can be calculated by the equations below.

$$\alpha_S = 0 \qquad\qquad \text{for } \beta \geq \beta s0 \qquad (16)$$

$$\alpha_S = \cos^{-1}(H_0/(L \times \cos\beta)) \qquad \text{for } \beta < \beta s0 \qquad (17)$$

As illustrated in the top view at the upper portion of FIG. 14, the angle between the aircraft nose direction 81 and the azimuth direction component of the orientation direction 82, which is the direction in which the orientation direction 82 of the antenna is projected on the antenna mounting surface, is the azimuth angle $\alpha$. Length of a line segment connecting the upper left corners of the antennas 1A and 1B in the figure is the unit spacing L, and this line segment is parallel to the aircraft nose direction 81. The intersection point of the antenna 1B and a straight line passing through the upper edge of the antenna 1A in the figure and being parallel to the orientation direction 82 is located at a distance of $L \times \sin\alpha$, downward as viewed in the figure, from the upper edge of the antenna 1B as viewed in the figure. In the case in which this boundary of the region shadowed by the antenna 1A is located at a lower position, as viewed in the figure, than a line expressing the aperture surface of the antenna 1B, the overlap width $G_{W1}$ is zero. Thus the overlap width $G_{W1}$ can be calculated by the below equation.

$$G_{W1} = \max(0, W_0 - L \times \sin\alpha) \qquad (18)$$

From Equation (18), it is understood that the overlapping portion formed by overlapping between the front and rear antennas in the width direction of the antennas does not exist when the azimuth angle $\alpha$ is large. A shadowing finish azimuth angle $\alpha_F$, which is the maximum azimuth angle $\alpha$ at which an overlapping portion is generated in the width direction by the front and rear antennas, can be calculated by the equation below. The shadowing finish azimuth angle $\alpha_F$ becomes smaller with increase in the unit spacing L.

$$\alpha_F = \sin^{-1}(W_0/L) \qquad (19)$$

The present invention has the characteristic, which is not obtained by the conventional technology, that shadowing is not generated, regardless of the zenith angle $\beta$, in the case of a large azimuth angle $\alpha$ as indicated in Equation (19), that is, in the case of a large angular difference between the azimuth angle component of the orientation direction and the advancing direction of the aircraft.

Surface area Gsi of the shadowed portion can be calculated by the equation below by combination of Equation (14) and Equation (18).

$$
\begin{aligned}
G_{S1} &= G_{H1} \times G_{W1} \\
&= \max(0,\ H_0 - L \times \cos\alpha \times \cos\beta) \\
&\quad \times \max(0,\ W_0 - L \times \sin\alpha)
\end{aligned}
\qquad (20)
$$

There is no generation of shadowing when $\alpha_S \geq \alpha_F$, and thus a lower limit exists in the zenith angle $\beta$ at which shadowing is generated. A shadowing lower limit zenith angle $\beta sm$, which is the lower limit of the zenith angle $\beta$ at which shadowing is generated at some azimuth angle $\alpha$, can be calculated by the below equation.

$$
\beta sm = \cos^{-1}(H_0/\sqrt{(L^2 - W_0^2)},\ \overline{\phantom{xxxxx}}\ )
\qquad (21)
$$

The azimuth angle $\alpha$ is also included in Equation (20) for calculating the surface area $G_{S1}$ of the shadowed portion of Embodiment 1. That is to say, the surface area $G_{S1}$ of the shadowed portion changes when the azimuth angle $\alpha$ changes. The proportion of the surface area $G_{S1}$ of the shadowed portion of the antenna relative to the aperture area surface of the antenna is referred to as the shadowing rate and is expressed by a variable $K_1(\alpha, \beta)$. The antenna utilization rate of the entire antenna considering shadowing is expressed by a variable $M_1(\alpha, \beta)$. The shadowing rate $K_1(\alpha, \beta)$ and the antenna utilization rate $M_1(\alpha, \beta)$ can be calculated by the below equation. The surface area $G_{S1}$ of the shadowed portion is expressed as $G_{S1}(\alpha, \beta)$ in order to indicate that $G_{S1}$ is a function of the azimuth angle $\alpha$ and the zenith angle $\beta$.

$$
K_1(\alpha, \beta) = G_{S1}(\alpha, \beta)/(H_0 \times W_0)
\qquad (22)
$$

$$
M_1(\alpha, \beta) = 1.0 - 0.5 \times K_1(\alpha, \beta)
\qquad (23)
$$

The shadowed surface area of the antenna apparatus of Comparative Example 2 is discussed below. In the antenna apparatus of Comparative Example 2, the overlap height is expressed by a variable $G_{H2}$, the overlap width is expressed by a variable $G_{W2}$, and the surface area of the shadowed portion is expressed by a variable $G_{S2}$. In Comparative Example 2, the orientation direction distance D is fixed at L and does not depend on the azimuth angle $\alpha$. Thus the overlap height $G_{H2}$ can be calculated by the below equation.

$$
G_{H2} = \max(0,\ H_0 - L \times \cos\beta)
\qquad (24)
$$

In Comparative Example 2, the rear antenna always exists right behind in the orientation direction from the front antenna, even when the antennas rotate around the azimuth axis. Thus the overlap width $G_{W2}$ can be calculated by the following equation.

$$
G_{W2} = W_0
\qquad (25)
$$

Thus the variable $G_{S2}$ expressing the surface area of the shadowed portion can be calculated by the following equation.

$$
\begin{aligned}
G_{S2} &= G_{H2} \times G_{W2} \\
&= \max(0,\ H_0 - L \times \cos\beta) \times W_0
\end{aligned}
\qquad (26)
$$

The shadowed surface area $G_{H2}$ of the antenna apparatus of Comparative Example 2 depends on the zenith angle β and does not depend on the azimuth angle α, and thus the shadowing rate $K_2$ and the antenna utilization rate $M_2$ can be expressed as functions only of the zenith angle β, as below.

$$K_2(\beta) = G_{S2}(\beta)/(H_0 \times W_0) \qquad (27)$$

$$M_2(\beta) = 1.0 - 0.5 \times K_2(\beta) \qquad (28)$$

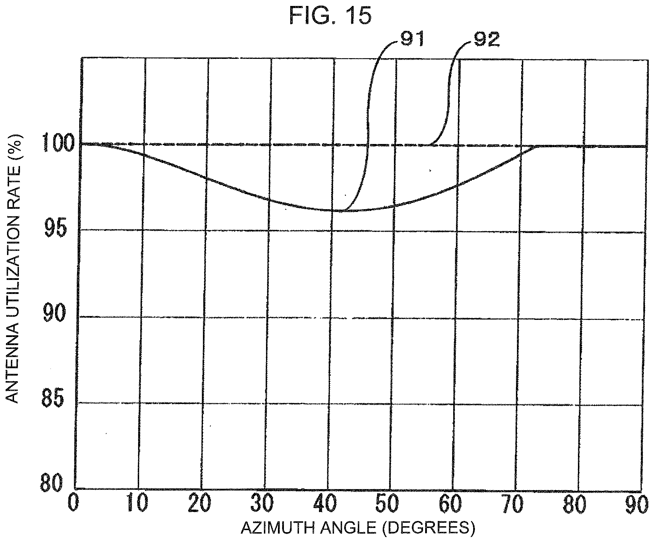

Shadowing is generated in the antenna apparatus 100 in the range of $0 < \alpha < \alpha_F$ at the shadowing start zenith angle $\beta_{s0}$. In the antenna apparatus of Comparative Example 2, shadowing is not generated, regardless of the azimuth angle α, at the shadowing start zenith angle $\beta_{s0}$. Thus when the zenith angle β is in the vicinity of the shadowing start zenith angle $\beta_{s0}$, the shadowing rate of the antenna apparatus of the present invention may be larger than that of Comparative Example 2, depending on the azimuth angle. With reference to FIG. 15, it is described about to what extent the antenna utilization rate of the antenna apparatus of the present invention declines for various values of the azimuth angle α. FIG. 15 is a drawing for explaining the relationship between the antenna azimuth angles and the antenna utilization rates at the zenith angle in which antenna shadowing is generated in the antenna apparatus according to Embodiment 1. In FIG. 15, the zenith angle β is the shadowing start zenith angle $\beta_{s0}$ (= 79.5°, 10.5° as the elevation angle) in the case of $L = W_1$. A plot 91 indicated by the solid line represents the antenna utilization rate $M_1$ of the present invention. A plot 92 indicated by the dashed line represents the antenna utilization rate M2 of Comparative Example 2. As may be understood from FIG. 15, the antenna utilization rate $M_1$ of the present invention declines to about 96% when the azimuth angle α is in the vicinity of 40°. Even though the antenna utilization rate $M_1$ declines, since a value thereof greater than or equal to about 96% is obtained, there is no problem in operations.

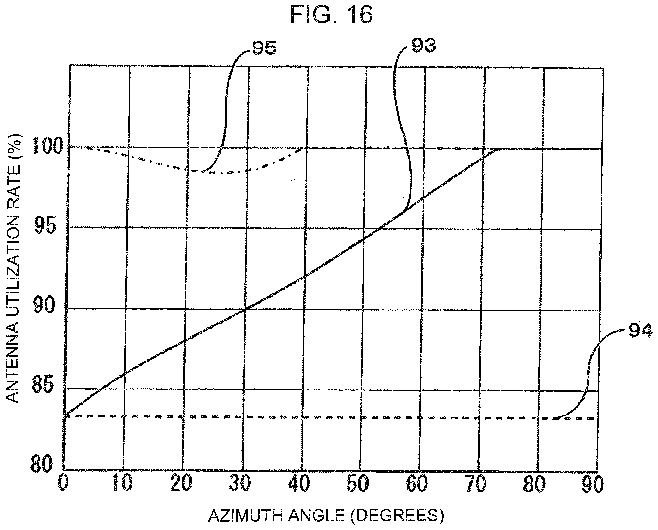

FIG. 16 illustrates the case in which the zenith angle β is larger than the case shown in FIG. 15 and the zenith angle β is the shadowing start zenith angle $\beta_{s0}$ (= 82.3°, 7.7°as the elevation angle) for the antenna apparatus 100 in the case in which L = 1.5Wi. FIG. 16 is a drawing for explaining a relationship between the antenna azimuth angles and the antenna utilization rates at another zenith angle in which shadowing is generated in the antenna apparatus according to Embodiment 1. In FIG. 16, a plot 93 indicated by the solid line represents the antenna utilization rate $M_1$ of the antenna apparatus 100 (case of $L = W_1$). A plot 94 indicated by the dashed line represents the antenna utilization rate $M_2$ of the Comparative Example 2. A plot 95 indicated by the dot-dashed line represents the antenna utilization rate $M_1$ of the antenna apparatus 100 (case of $L = 1.5W_1$). The antenna utilization rate $M_1$ of the antenna apparatus 100 (case of L = Wi) declines to about 84% when the azimuth angle α is 0°. However, as α increases, the antenna utilization rate $M_1$ becomes larger almost linearly, and when α is greater than or equal to about 71°, the antenna utilization rate becomes 100%. The antenna utilization rate $M_1$ of the antenna apparatus 100 (case of $L = 1.5W_1$) declines to about 98%, at the lowest, in the range of α less than or equal to 40°. The antenna utilization rate $M_2$ in Comparative Example 2 is about 84% and does not depend on the azimuth angle α. It is understood that the antenna utilization rate is improved by the present invention when the azimuth angle α is large. According to the present invention, the reduction in the antenna utilization rate can be suppressed by increasing the unit spacing L without increasing the nose-direction cross-sectional area.

Size of the surface area of the shadowed portion is evaluated below by assuming that probability distribution of the azimuth angle α takes a constant value for all orientations, and by averaging the surface area $G_{S1}$ of the shadowed portion at different azimuth angles α.

An average surface area $G_{SA}$ of the shadowed portion can be calculated from the below indicated equation. Further, with respect to the azimuth angle α, the positional relationship between the front and rear antennas has positive-negative symmetry and is symmetrical with respect to 90° (= π/2 [rad]), and thus the integration range of α is determined to be from 0 to π/2 [rad].

$$G_{SA} = (1/\pi) \int G_{S1}\, d\alpha \qquad (29)$$

The steps of derivation are omitted. The below indicated equation can be used to calculate the average surface area $G_{SA}$ of the shadowed portion at the zenith angle β ($\geq \beta sm$) at which shadowing is generated at some azimuth angle α.

$$G_{SA} = (2/\pi) \times H_0 \times W_0$$
$$\times(\alpha_F - \alpha_S - (L/W_0)\times(\cos\alpha_S - \cos\alpha_F)$$
$$- (W_0/H_0)\times(\cos\beta/2)$$
$$+ (L \times \cos\beta/H_0) \times\sin\alpha_S$$
$$- (L^2 \times \cos\beta/(2H_0 \times W_0))\times\sin^2\alpha_S) \qquad (30)$$

The below-listed equation can be used to calculate the average surface area $G_{SA}$ of the shadowed portion at the zenith angle $\beta$ ($\geq \beta s0$) at which the overlapping portion is generated in the height direction when the azimuth angle $\alpha$ is 0°.

$$G_{SA} = (2/\pi) \times H_0 \times W_0$$
$$\times(\alpha_F - (L/W_0)\times(1 - \cos\alpha_F) - (W_0/H_0)\times(\cos\beta/2)) \qquad (31)$$

A shadowing rate $K_{A1}$ and an antenna utilization rate $M_{A1}$ calculated with the average surface area $G_{SA}$ of the shadowed portion are defined below.

$$K_{A1}(\beta) = G_{SA}(\beta)/( H_0 \times W_0) \qquad (32)$$

$$M_{A1}(\beta) = 1.0 - 0.5\times K_{A1}(\beta) \qquad (33)$$

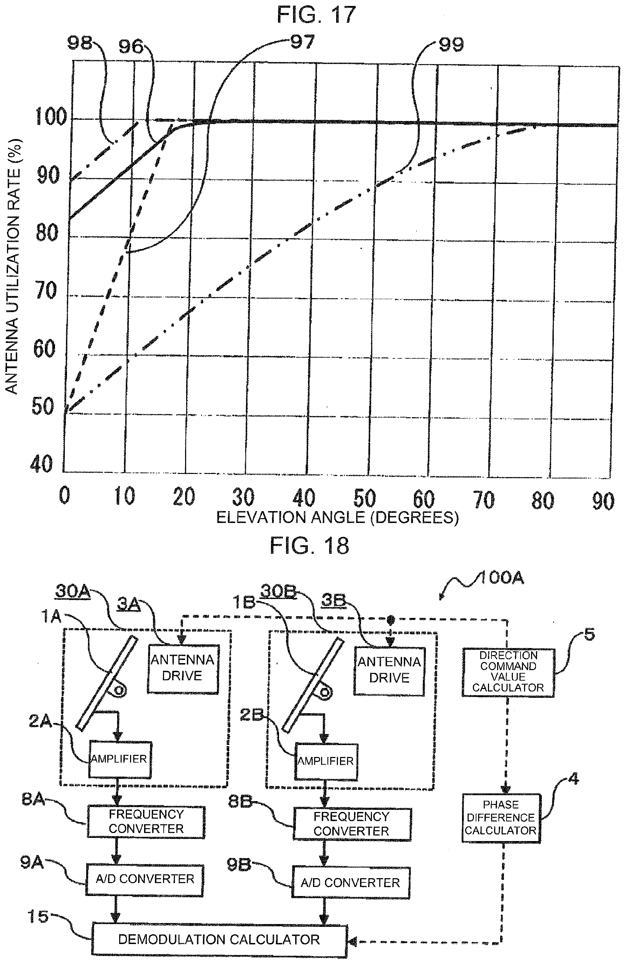

How the average surface area of the shadowed portion varies depending on the elevation angle is considered below. FIG. 17 is a drawing for explaining a relationship between the elevation angle and the antenna utilization rate averaged by varying the antenna azimuth angle of the antenna apparatus according to Embodiment 1. In FIG. 17, a plot 96 indicated by the solid line represents the antenna utilization rate $M_{A1}$ of the antenna apparatus 100 (case of L = $W_1$). A plot 97 indicated by the dashed line represents the antenna utilization rate $M_2$ of Comparative Example 2 (case of L = Wi). A plot 98 indicated by the dot-dashed line represents the antenna utilization rate $M_{A1}$ of the antenna apparatus 100 (case of L = 1.5$W_1$). A plot 99 indicated by the double-dot dashed line represents the antenna utilization rate $M_2$ of Comparative Example 2 (case of L = 1.02Ho). The case of L = 1.02$H_0$ is the case in which the nose-direction cross-sectional area is made as small as possible in Comparative Example 2. L is set equal to 1.02$H_0$ because the antenna has a thickness, and in the case of L = $H_0$, interference occurs between adjacent antennas, and the antennas cannot be directed in the direction perpendicular to the mounting surface.

The antenna utilization rate $M_2$ of the Comparative Example 2 in the case of L = $W_1$ declines rapidly when the elevation angle becomes smaller than the angle 16° (74° as the zenith angle $\beta$), and declines to 50% when the elevation angle is 0° (90° as the zenith angle $\beta$). Further, in the case of L = 1.02$H_0$, the antenna utilization rate $M_2$ starts to decline when the elevation angle reaches 80° (10° as the zenith angle $\beta$), and the decline curve is like a sinusoidal shape and reaches 75% at an elevation angle of 30° (60° as the zenith angle $\beta$). In Comparative Example 2, the shadowing between the front and rear antennas becomes large as the nose-direction cross-sectional area is made smaller. In a case in that shadowing is not generated at an elevation angle greater than or equal to 16° (74° as the zenith angle $\beta$), the nose-direction cross-sectional area is about 1.5-times larger compared with the present invention. In this manner, a tradeoff arises between the occurrence of shadowing and the decrease in the nose-direction cross-sectional area.

In contrast, in the case of L = $W_1$ in the present invention, the utilization rate $M_{A1}$ is about 83% even when the elevation angle is 0° (90° as the zenith angle $\beta$). This is because shadowing is not generated when the azimuth angle $\alpha$ is large, and even when shadowing is generated, the shadowed surface area is small. Further, when L = 1.5$W_1$, the antenna utilization rate $M_{A1}$ can be maintained at 90% or above even when the elevation angle is 0° (90° as the zenith angle $\beta$).

In this manner, the front and rear antennas rotate around different azimuth axes according to the present invention, and thus when the azimuth angle is large, the overlapping of the front and rear antennas is not generated. Thus when the antenna is directed at a low elevation angle, the decrease in the effective surface area of the aperture surface by antenna shadowing is smaller for the present invention than for Comparative Example 2. That is to say, even in the case in which antenna utilization rate, that is, antenna gain, decreases, the antenna gain is kept to be greater than or equal to a permissible lower limit.

It is understood that the present invention can provide an antenna utilization rate greater than or equal to about 80% even when the antenna is directed at a low elevation angle near 0°. In the case of the low elevation angle at which the decrease in antenna utilization rate is large in Comparative Example 2, the antenna utilization rate according to the present invention is greatly improved. At the zenith angle in the vicinity of the beginning of shadowing of the antenna in Comparative Example 2, the antenna utilization rate of the present invention is worse than that of Comparison Example 2, an antenna utilization rate is kept to be greater than or equal to about 96%, and thus there is no problem in operations.

An antenna apparatus receiving radio waves from a satellite is described above in this embodiment. The present invention can be applied to receiving in an antenna apparatus used for both transmitting and receiving. The present invention is explained in a case in that the mobile object is an aircraft. The present invention can be applied to other types of mobile objects such as vehicles, ships, and the like. The present invention is greatly effective for applying to a mobile object moving at high speed and requiring that drag force is reduced as much as possible. When the antenna is mounted on a vehicle, the present invention is effective when lowering of the vehicle height is required in the antenna-mounted state. In the case of mounting on a mobile object that is not an aircraft, the cross-sectional area of the antenna apparatus viewed from the advancing direction of the mobile object is also referred to as the nose-direction cross-sectional area.

Although two antenna units are used in the above description, three or more antenna units may be used. When the antenna units and the antennas are all the same, advantages are obtained such as minimizing the nose-direction cross-sectional area, lowering of production cost, and the like.

However, the antenna units are not necessarily all the same. Even when the antenna units have a part that is different between units, the sizes of the antennas are preferably the same. When there is a constraint on the space for mounting the antenna apparatus, antenna units having different sizes may be used in accordance with the constraint. For example, only the size of the antenna unit that is nearest to the aircraft nose may be made small. Multiple antenna units are disposed parallel to the aircraft nose direction in this embodiment. The arrangement direction may be non-parallel to the aircraft nose direction as long as the deviation angle is small.

In the case in which three or more antenna units are used, the centers of the azimuth axis shafts of each of the antenna are preferably disposed on a single straight line to minimize the nose-direction cross-sectional area. As long as the deviations of the azimuth axes from the straight line are not large, the azimuth axes may be disposed with offset from the straight line. The antenna units may be disposed in a single row such that a straight line passes through each of the antenna units. It is preferable that the unit spacing is the same, the unit spacing may differ.

The above also applies to other embodiments.

Embodiment 2

In Embodiment 2, analog signals generated from radio waves received by an antenna are converted to digital signals and then are combined. FIG. 18 is a functional block diagram of an antenna apparatus according to Embodiment 2 of the present invention. Only the points different from the case of Embodiment 1 illustrated in FIG. 5 are described below.

An antenna apparatus 100A includes: a frequency converter 8A and an A/D converter 9A provided for an antenna unit 30A, and a frequency converter 8B and an A/D converter 9B provided for an antenna unit 30B. The frequency converter 8A converts the signal output by the antenna unit 30A to a lower frequency and outputs the converted signal. The A/D converter 9A performs analog-digital conversion to convert the analog received signal output from the frequency converter 8A to a digital received signal, and outputs the digital received signal. In the same manner, the frequency converter 8B converts the signal output by the antenna unit 30B to the lower frequency and outputs the converted signal. The A/D converter 9B performs analog-digital conversion to convert the analog received signal output from the frequency converter 8B to a digital received signal, and outputs the digital received signal. The A/D converter 9 is an analog-digital converter for converting the received signal output from the frequency converter 8 to the digital received signal that has a predetermined number of bits and a predetermined sampling rate.

The antenna apparatus 100A has a demodulation calculator 15 for matching phases and electronic combining calculation of the digital received signals output from the A/D converter 9A and the A/D converter 9B on the basis of the phase difference calculated by the phase difference calculator 4.

The frequency converter 8 performs frequency conversion to convert the frequency of the received signal from the satellite to a lower frequency so that the digital received signal can be easily converted by the A/D converter 9.

The demodulation calculator 15 performs combining of the received signal by using the phase differences calculated by the phase difference calculator 4 to perform phase shifting calculation to change phases of the digital received signals output from the A/D converter 9A and the A/D converter 9B, and then the demodulation calculator 15 executes digital demodulation calculation.

Due to the combining of the received signal being performed by signal processing of the digital signals in Embodiment 2, the phase shifter is unnecessary, and the apparatus is simplified. Further, the range in which phase shifting is possible increases in the case of digital signal processing compared with the phase shifter that processes the analog signal.

Further, within the scope of the spirit of the invention of the present invention, various embodiments may be freely combined, and various embodiments may be modified or omitted.

Reference Signs List

| | |
|---|---|
| 100, 100A, 100X, 100Y | Antenna apparatus |
| 30A, 30B | Antenna unit |
| 70 | Aircraft body |
| 71A, 71B | Aircraft body fixing portion (mobile object fixing portion) |
| 1A, 1B, 1X, 1YA, 1YB | Antenna |
| 2A, 2B | Amplifier |
| 3A, 3B | Antenna drive |
| 31A, 31B | Elevation axis |
| 32A, 32B | Elevation angle changer |
| 33A, 33B | Azimuth angle changer |
| 34 | Drive controller |
| 4 | Phase difference calculator |
| 5 | Direction command value generator |
| 40 | Signal combiner |
| 6A, 6B | Phase shifter |
| 7 | Combiner |
| 50 | Demodulation device |
| 81 | Aircraft nose direction |
| 82 | Orientation direction |
| 83 | Direction vertical to the aircraft body |
| 84 | Antenna space |
| 85 | Shadowed portion |
| 91, 92, 93, 94, 95, 96, 97, 98, 99 | Plot |
| 8A, 8B | Frequency converter |
| 9A, 9B | A/D converter |
| 15 | Demodulation calculator |

**Claims**

1. An antenna apparatus comprising:

   a plurality of antenna units disposed in a row, each antenna unit of the plurality of antenna units including: an antenna to receive a radio wave from a satellite and generate a received signal of a plurality of received signals, and an antenna drive to change an orientation direction, the orientation direction being a direction in which the antenna is directed;
   a direction command value generator to generate a direction command value, which is a command value provided to the antenna drive, such that the orientation direction matches a direction in which the satellite exists;
   a phase difference calculator to calculate at least one phase difference, the phase difference being a difference in phase between the plurality of received signals generated by the plurality of antennas; and
   a signal combiner to combine the received signals based on the at least one phase difference.

2. The antenna apparatus according to claim 1, wherein
   the antenna unit further includes a mobile object fixing portion to fix the antenna drive to a mobile object, and
   the direction command value generator generates the direction command value based on a position of the mobile object, an attitude of the mobile object, and a position of the satellite.

3. The antenna apparatus according to claim 2, wherein
   the antenna drive includes:

   an elevation angle changer to support the antenna rotatably around an elevation axis parallel to a longitudinal direction of the antenna, and
an azimuth angle changer to support, relative to the mobile object fixing portion, the elevation angle changer rotatably around an azimuth axis perpendicular to the elevation axis.

4. The antenna apparatus according to claim 3, wherein
each antenna unit of the plurality of antenna units is disposed such that the azimuth axis of the antenna unit exists on a straight line parallel to an advancing direction of the mobile object.

5. The antenna apparatus according to any one of claims 1 to 4, wherein a size of each antenna included in the antenna unit of the plurality of antenna units is the same.

6. The antenna apparatus according to any one of claims 1 to 5, wherein the signal combiner includes: a phase shifter capable of matching, based on the at least one phase difference, phases of the plurality of received signals, and a combiner to combine phase-matched received signals output from the phase shifter.

7. The antenna apparatus according to any one of claims 1 to 5, wherein the signal combiner includes:

a plurality of analog-digital converters, each analog-digital converter of the plurality of analog-digital converters being provided for a respective antenna included in the antenna unit of the plurality of antenna units, to convert the received signals to digital received signal in a predetermined sampling rate, each digital received signal of the plurality of digital signals having a predetermined number of bits, and
a demodulation calculator to combine the plurality of digital received signals based on the at least one phase difference.

## FIG. 1

## FIG. 2

## FIG. 3

## FIG. 4

## FIG. 5

## FIG. 6

## FIG. 7

## FIG. 8

## FIG. 9

## FIG. 10

## FIG. 11

20

# FIG. 12

# FIG. 13

## FIG. 14

## FIG. 15

FIG. 16

# FIG. 17

ELEVATION ANGLE (DEGREES)

# FIG. 18

<table>
<tr><td colspan="2" style="text-align:center"><strong>INTERNATIONAL SEARCH REPORT</strong></td><td>International application No.<br>PCT/JP2015/065873</td></tr>
</table>

A. CLASSIFICATION OF SUBJECT MATTER
*H01Q21/06*(2006.01)i, *H01Q3/08*(2006.01)i

According to International Patent Classification (IPC) or to both national classification and IPC

B. FIELDS SEARCHED

Minimum documentation searched (classification system followed by classification symbols)
H01Q21/06, H01Q3/08

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-510104 A (EMS Technologies Inc.),<br>14 April 2005 (14.04.2005),<br>paragraphs [0020] to [0031]; fig. 1 to 6<br>& US 2003/0090416 A1    & WO 2003/043124 A1<br>& EP 1456903 A           & CA 2466743 A<br>& BR 214195 A            & CN 1602564 A<br>& AT 403949 T            & MX PA04004447 A | 1-7 |
| Y | JP 2014-187489 A (Furuno Electric Co., Ltd.),<br>02 October 2014 (02.10.2014),<br>paragraphs [0032] to [0062]; fig. 1 to 4<br>(Family: none) | 1-7 |
| Y | JP 3767372 B2 (Mitsubishi Electric Corp.),<br>19 April 2006 (19.04.2006),<br>paragraphs [0014] to [0068]; fig. 1 to 5<br>& JP 2002-158525 A | 2-7 |

☒ Further documents are listed in the continuation of Box C.         ☐ See patent family annex.

| | |
|---|---|
| *    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>26 June 2015 (26.06.15) | Date of mailing of the international search report<br>07 July 2015 (07.07.15) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

26

**INTERNATIONAL SEARCH REPORT**

| International application No. |
| --- |
| PCT/JP2015/065873 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 8-250921 A  (Alpine Electronics, Inc.),<br>27 September 1996 (27.09.1996),<br>paragraph [0015]; fig. 1<br>(Family: none) | 4-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005510104 A